# EUROPEAN PATENT APPLICATION

(11) **EP 4 322 703 A1**
(43) Date of publication of application: **14.02.2024**
(21) Application number: 23187136.9
(22) Date of filing: 24.07.2023
(51) Int. Cl.: H04W 76/28, H04W 68/00, H04W 76/16, H04W 88/06

(54) **RETURN TIME INDICATION ON NETWORK SWITCHING**

(30) Priority: 10.08.2022 IN 202241045714
(71) Applicant: Nokia Technologies Oy, 02610 Espoo (FI)
(72) Inventor: SABOURI-SICHANI, Faranaz, Aalborg (DK); LASELVA, Daniela, Klarup (DK); SELVAGANAPATHY, Srinivasan, Bangalore (IN)
(74) Representative: Nokia EPO representatives

(57) **Abstract**

Systems, methods, apparatuses, and computer program products for return time indication on network switching. A method may include determining that expected activity in a second network element will last more than a maximum allowed time of temporary absence from a first network element while being connected to the first network element. The method may also include transmitting based on the determination, to the first network element, an assistance information message indicating a preference to leave the connection with the first network element. The method may further include receiving a connection release message from the first network element including an indication for a user equipment to return to the connection with the first network element, in response to the assistance information message.

## Description

### FIELD:

Some example embodiments may generally relate to mobile or wireless telecommunication systems, such as Long Term Evolution (LTE) or fifth generation (5G) new radio (NR) access technology, or 5G beyond, or other communications systems. For example, certain example embodiments may relate to apparatuses, systems, and/or methods for return time indication on network switching.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. Fifth generation (5G) wireless systems refer to the next generation (NG) of radio systems and network architecture. 5G network technology is mostly based on new radio (NR) technology, but the 5G (or NG) network can also build on E-UTRAN radio. It is estimated that NR may provide bitrates on the order of 10-20 Gbit/s or higher, and may support at least enhanced mobile broadband (eMBB) and ultra-reliable low-latency communication (URLLC) as well as massive machine-type communication (mMTC). NR is expected to deliver extreme broadband and ultra-robust, low-latency connectivity and massive networking to support the Internet of Things (IoT).

### SUMMARY:

Some example embodiments may be directed to a method. The method may include determining that expected activity in a second network element will last more than a maximum allowed time of temporary absence from a first network element while being connected to the first network element. The method may also include transmitting based on the determination, to the first network element, an assistance information message indicating a preference to leave the connection with the first network element. The method may further include receiving a connection release message from the first network element including an indication for a user equipment to return to the connection with the first network element, in response to the assistance information message.

Other example embodiments may be directed to an apparatus. The apparatus may include at least one processor and at least one memory including computer program code. The at least one memory and computer program code may also be configured to, with the at least one processor, cause the apparatus at least to determine that expected activity in a second network element will last more than a maximum allowed time of temporary absence from a first network element while being connected to the first network element. The apparatus may also be caused to transmit based on the determination, to the first network element, an assistance information message indicating a preference to leave the connection with the first network element. The apparatus may further be caused to receive a connection release message from the first network element including an indication for the apparatus to return to the connection with the first network element, in response to the assistance information message.

Other example embodiments may be directed to an apparatus. The apparatus may include means for determining that expected activity in a second network element will last more than a maximum allowed time of temporary absence from a first network element while being connected to the first network element. The apparatus may also include means for transmitting based on the determination, to the first network element, an assistance information message indicating a preference to leave the connection with the first network element. The apparatus may further include means for receiving a connection release message from the first network element comprising an indication for the apparatus to return to the connection with the first network element, in response to the assistance information message.

In accordance with other example embodiments, a non-transitory computer readable medium may be encoded with instructions that may, when executed in hardware, perform a method. The method may include determining that expected activity in a second network element will last more than a maximum allowed time of temporary absence from a first network element while being connected to the first network element. The method may also include transmitting based on the determination, to the first network element, an assistance information message indicating a preference to leave the connection with the first network element. The method may further include receiving a connection release message from the first network element including an indication for a user equipment to return to the connection with the first network element, in response to the assistance information message.

Other example embodiments may be directed to a computer program product that performs a method. The method may include determining that expected activity in a second network element will last more than a maximum allowed time of temporary absence from a first network element while being connected to the first network element. The method may also include transmitting based on the determination, to the first network element, an assistance information message indicating a preference to leave the connection with the first network element. The method may further include receiving a connection release message from the first network element including an indication for a user equipment to return to the connection with the first network element, in response to the assistance information message.

Other example embodiments may be directed to an apparatus that may include circuitry configured to determine that expected activity in a second network element will last more than a maximum allowed time of temporary absence from a first network element while being connected to the first network element. The apparatus may also include circuitry configured to transmit based on the determination, to the first network element, an assistance information message indicating a preference to leave the connection with the first network element. The apparatus may further include circuitry configured to receive a connection release message from the first network element comprising an indication for the apparatus to return to the connection with the first network element, in response to the assistance information message.

Certain example embodiments may be directed to a method. The method may include receiving, from a user equipment, an assistance information message comprising an assistance information message indicating a preference of the user equipment to leave a connection with a first network element. The method may also include releasing or suspending a communication connection with the user equipment. The method may further include buffering data for the user equipment for at least an absence time of the user equipment from a first network element. In addition, the method may include transmitting to the user equipment a connection release message including an indication for the user equipment to return to the connection with the apparatus, in response to the assistance information message.

Other example embodiments may be directed to an apparatus. The apparatus may include at least one processor and at least one memory including computer program code. The at least one memory and computer program code may be configured to, with the at least one processor, cause the apparatus at least to receive, from a user equipment, an assistance information message comprising an assistance information message indicating a preference of the user equipment to leave a connection with the apparatus. The apparatus may also be caused to release or suspend a communication connection with the user equipment. The apparatus may further be caused to data for the user equipment for at least an absence time of the user equipment from the apparatus. In addition, the apparatus may be caused to transmit to the user equipment a connection release message including an indication for the user equipment to return to the connection with the apparatus, in response to the assistance information message.

Other example embodiments may be directed to an apparatus. The apparatus may include means for receiving, from a user equipment, an assistance information message comprising an assistance information message indicating a preference of the user equipment to leave a connection with the apparatus. The apparatus may also include means for releasing or suspending a communication connection with the user equipment. The apparatus may further include means for buffering data for the user equipment for at least an absence time of the user equipment from the apparatus. In addition, the apparatus may include means for transmitting to the user equipment a connection release message including an indication for the user equipment to return to the connection with the apparatus, in response to the assistance information message.

In accordance with other example embodiments, a non-transitory computer readable medium may be encoded with instructions that may, when executed in hardware, perform a method. The method may include receiving, from a user equipment, an assistance information message comprising an assistance information message indicating a preference of the user equipment to leave a connection with a first network element. The method may also include releasing or suspending a communication connection with the user equipment. The method may further include buffering data for the user equipment for at least an absence time of the user equipment from a first network element. In addition, the method may include transmitting to the user equipment a connection release message including an indication for the user equipment to return to the connection with the apparatus, in response to the assistance information message.

Other example embodiments may be directed to a computer program product that performs a method. The method may include receiving, from a user equipment, an assistance information message comprising an assistance information message indicating a preference of the user equipment to leave a connection with a first network element. The method may also include releasing or suspending a communication connection with the user equipment. The method may further include buffering data for the user equipment for at least an absence time of the user equipment from a first network element. In addition, the method may include transmitting to the user equipment a connection release message including an indication for the user equipment to return to the connection with the apparatus, in response to the assistance information message.

Other example embodiments may be directed to an apparatus that may include circuitry configured to receive, from a user equipment, an assistance information message comprising an assistance information message indicating a preference of the user equipment to leave a connection with the apparatus. The apparatus may also include circuitry configured to release or suspend a communication connection with the user equipment. The apparatus may further include circuitry configured to data for the user equipment for at least an absence time of the user equipment from the apparatus. In addition, the apparatus may include circuitry configured to transmit to the user equipment a connection release message comprising an indication for the user equipment to return to the connection with the apparatus, in response to the assistance information message.

### BRIEF DESCRIPTION OF THE DRAWINGS:

For proper understanding of example embodiments, reference should be made to the accompanying drawings, wherein:
FIG. 1 illustrates an example signal diagram, according to certain example embodiments.
FIG. 2 illustrates an example flow diagram of a method, according to certain example embodiments.
FIG. 3 illustrates an example flow diagram of another method, according to certain example embodiments.
FIG. 4 illustrates a set of apparatuses, according to certain example embodiments.

### DETAILED DESCRIPTION:

It will be readily understood that the components of certain example embodiments, as generally described and illustrated in the figures herein, may be arranged and designed in a wide variety of different configurations. The following is a detailed description of some example embodiments of systems, methods, apparatuses, and computer program products for return time indication on network (NW) switching for multiple universal subscriber identity modules (MUSIM). For instance, certain example embodiments may be directed to MUSIM UEs leaving an RRC_CONNECTED state with a current NW.

The features, structures, or characteristics of example embodiments described throughout this specification may be combined in any suitable manner in one or more example embodiments. For example, the usage of the phrases "certain embodiments," "an example embodiment," "some embodiments," or other similar language, throughout this specification refers to the fact that a particular feature, structure, or characteristic described in connection with an embodiment may be included in at least one embodiment. Thus, appearances of the phrases "in certain embodiments," "an example embodiment," "in some embodiments," "in other embodiments," or other similar language, throughout this specification do not necessarily refer to the same group of embodiments, and the described features, structures, or characteristics may be combined in any suitable manner in one or more example embodiments. Further, the terms "cell", "node", "gNB", or other similar language throughout this specification may be used interchangeably. Further, as described herein, Network A (NW-A) may be referred to as the network corresponding to the UE's universal subscriber identity module (USIM) in RRC_CONNECTED state, and Network B (NW-B) may be referred to as the network corresponding to the UE's USIM being in RRC_IDLE or RRC_INACTIVE state. Additionally, as described herein, use of "or" and "and/or" may be used interchangeably, and "or" may also mean "and/or".

The technical specifications of 3^{rd} Generation Partnership Project (3GPP) provide support for multiple universal subscriber identity module (MUSIM) devices. For example, 3GPP specifies that if necessary, enhancement(s) may be provided to address collision due to reception of paging when a UE is in IDLE/INACTIVE state in two different networks associated with respective subscriber identity modules (SIMs). The networks may include NW-A and NW-B, where NW-A may be NR, and NW-B may be LTE or NR. 3GPP also specifies a mechanism for the UE to notify NW-A of the UE's switch from NW-A corresponding to the UE's first SIM to NW-B corresponding to the UE's second SIM in a MUSIM scenario. Furthermore, 3GPP may specify a mechanism for an incoming page to indicate to the UE whether the service is VoLTE/VoNR. However, certain example embodiments described herein may enable UE switching between NW-A where it is in an RRC_CONNECTED state, and NW-B corresponding to the UE's other USIM. At NW-B, the UE may be in RRC_IDLE state to allow idle state operations in NW-B with minimum impact to the connected state in NW-A.

A multi-MUSIM may have two or more simultaneous 3GPP/3GPP2 network subscriptions with multiple corresponding international mobile subscriber identities (IMSI) in case of evolved packet system (EPS) or subscription permanent identifier (SUPI) in case of 5GS. Here, EPS and SUPI may be associated with a particular subscription belonging to the same or different mobile network operator (MNO) or mobile virtual network operator (MVNO).

Certain mobile devices (e.g., phones) may have a maximum number of supported USIMs of two. However, some mobile devices may support triple-SIM. With the introduction of electronic SIM (e-SIM), it may be possible that some phones will support more than two USIMs.

The UE's behavior with respect to the simultaneous handling of multiple USIMs may depend on the UE's capabilities related to concurrent independent Rx and/or Tx operations. For instance, for a single Rx/single Tx, the UE may only be capable of receiving traffic from one network and/or transmitting traffic to one network at a time. On the other hand, there may also be dual Rx/single Tx where the UE is capable of simultaneously receiving traffic from two networks, but is capable of transmitting to only one network at a time. Additionally, the capabilities may define a dual Rx/dual Tx scenario where the UE is capable of simultaneously receiving and/or transmitting to/from two networks.

In single Rx/single Tx devices, it may not be possible to receive paging or perform other idle/inactive state reception activities in one USIM while in RRC _CONNECTED state in another USIM. Thus, the MUSIM device may need to interrupt the device's RRC connection in one network corresponding to one USIM when the device has to perform any activity for the idle/inactive UE (i.e., the idle/inactive USIM) such as paging, monitoring, performing measurements, or the like in another network corresponding to another USIM.

In 3GPP, the UE may also be able to perform short activities on NW-B without leaving NW-A to avoid needing to leave the RRC connection with NW-A completely. This may be accomplished by the UE requesting a MUSIM gap. The UE may be allowed to request multiple MUSIM gaps and NW-A may configure multiple gaps according to the requested patterns. For instance, a single aperiodic gap, or multiple periodic gaps may be configured. For example, paging reception and idle state RRM measurements (both serving cell and neighbor cells including intra frequency, inter frequency, and inter radio access technology (RAT) measurement) may be identified as activities in NW-B for which the UE may need periodic gaps in its RRC connection at NW-A. The value range of these gaps may include, but not limited to, 3 ms, 4 ms, 6 ms, 10 ms, and/or 20 ms. Certain example activities in NW-B which may require aperiodic gap may include the SIB reception (including on-demand SIB), transmitting RAN-based notification area update (RNAU)/tracking area update (TAU), cell reselection, and busy indication. The gap length for these aperiodic gaps may be similar to the examples above with respect to the periodic gaps. These gap patterns may be requested by the UE in the RRC message UEAssistanceInformation (UAI) indicating the duration, periodicity and start time. If NW-A grants the requested gap patterns, it stops scheduling any data for that UE when the gap is active, so the UE can perform the needed activity in NW-B. The max length for the aperiodic gap in current 3GPP agreement is 20ms.

In cases where the UE will be absent for more than the max specified gap length, e.g., 20 ms, the UE may request a complete leave of RRC connection with the NW-A. The UE may then be allowed to leave without waiting for the NW-A response after a timer, such as for example, the musim-LeaveWithoutResponseTimer, has expired (the timer value may be set to a maximum of e.g., 100 ms). Additionally, the NW-A may release the UE before the timer expires, and move the UE to either RRC_IDLE or RRC INACTIVE state based on the NW-A's own and/or the UE's preference. In the event that the UE leaves RRC connection without a NW-A response at musim-LeaveWithoutResponseTimer expiration, the UE may move to the RRC_IDLE state.

A MUSIM UE in RRC_CONNECTED state in NW-A may request for a gap in its RRC connection without leaving the connection to NW-A, with the aim to perform RRC_IDLE/RRC_INACTIVE activities in NW-B during the gap if the gap length is not longer than the configured value. For any expected absences longer than the configured value (e.g., 20 ms), the UE may leave its RRC connection with NW-A. Prior to leaving, the UE may indicate to NW-A that it is leaving. However, in some instances, the UE may be allowed to leave without waiting for a NW response if no response was received within a configured time such as, for example, a maximum of 100 ms. The max configured value of 20 ms may be calculated based on on-demand SIB reception. However, there may be IDLE state activities that may take longer than the current aperiodic gap values, but which are still relatively short (i.e., within a few hundreds of milliseconds). Examples of such activities may include RNAU/TAU update, transmitting busy indication as a response to a paging, or short data transmission (SDT) from RRC _INACTIVE state.

When NW-A has pending DL data with lower priority, which cannot be scheduled within the configured time (e.g., up to 20 ms), before the UE leaves its RRC connection to NW-A, the pending packets may need to be dropped. Alternatively, NW-A may need to page the UE for the DL data if the pending packets are buffered at NW-A given that the UE is not aware that it has pending data, or the paging may be triggered due to the retransmission of those packets from the application. However, after the UE leaves its RRC connection with NW-A, NW-A may have no awareness of the duration of the UE's short absence, and may waste resources to page the UE when the UE is busy in another network (e.g., NW-B). Additionally, the UE may desire to stay in RRC_IDLE state in NW-A after it has left the RRC connection with NW-B no matter if it stays in RRC _CONNECTED state in NW-B for a long time or finishes its connection and moves to IDLE state after short time. Thus, the UE may leave its RRC connection in NW-A to do work in NW-B. Once the UE leaves the RRC connection in NW-A, the UE may be in RRC_IDLE state (if it leaves autonomously after wait time), or in RRC_IDLE or RRC_INACTIVE state if NW-A releases the UE and decides the state. The UE may then establish an RRC connection in NW-B, and be in RRC_CONNECTED state in NW-B. After the UE finishes the work in NW-B and moves to RRC_IDLE state in NW-B, the UE may still remain in the non-connected RRC state, i.e. RRC_IDLE or RRC _INACTIVE state in NW-A. That is, the UE may be in non-connected RRC state RRC in both NW-A and NW-B. In view of the above, certain example embodiments may provide an efficient provisioning of data that may be pending at the network, after the UE leaves its RRC connection with one NW (NW-A) due to required operations in another NW (NW-B).

According to certain example embodiments, it may be possible to provide an optimization to MUSIM UEs related to the network switching when the UE needs to leave its RRC connection in one network for an aperiodic gap to perform an (RRC idle/inactive) activity in another network which is longer than the maximum allowed time of temporary absence (e.g., 20 ms). However, the aperiodic gap may still be relatively short (e.g., max a few hundreds of milliseconds).

As described herein, the MUSIM UE may be capable of providing MUSIM assistance information for leave indication, and may initiate the procedure if it was configured to do so upon determining that an activity on USIM-B is more important than the RRC connection on USIM-A. In such a case, the UE may leave the RRC_CONNECTED state in NW-A. In other example embodiments, the UE may be triggered to leave its RRC connection in NW-A for a short activity in NW-B, during a time which is longer than a first configured value (e.g., 20 ms), which may be configured by the gNB (e.g., NW-A), but shorter than a second configured value, which may also be configured by the gNB (e.g., NW-A). According to certain example embodiments, the first configured value may indicate a maximum allowed time of temporary absence from RRC connection during which the connection is still kept when the UE performs an activity with another network, and the second configured value may indicate a maximum time of absence from RRC connection at MUSIM leave during which NW-A will avoid paging the UE due to any pending data at leave or arrived data during UE's absence, based on which the UE may add its leave-indication information to a UAI.

According to certain example embodiments, the UE may add an indication as part of its UAI including MUSIM assistance information indicating its (minimum/maximum) estimated time of absence. The indication may be a field that indicates the estimated time of absence from RRC connection at MUSIM leave. The time of absence may be estimated by the UE based on which activity it needs to perform with NW-B, and may include the total time for signaling and processing. For instance, in certain example embodiments, a random access channel (RACH) procedure for RRC connection establishment to NW-B may take about 40 ms. According to other example embodiments, the UE may establish the RRC connection to NW-B, and may stay in RRC _CONNECTED state with NW-B or move back to RRC_IDLE state in NW-B after completion of its transmission and reception of scheduled downlink (DL) data.

In certain example embodiments, the NW-A that has received the UAI for leave-indication information may have DL data pending for the UE. Thus, the NW-A may send an RRC release message to the UE including an indication that the UE should return to RRC connection with the NW-A as soon as possible because of the pending data. In certain example embodiments, the NW-A's decision for sending the RRC release message may depend on whether the time for transmitting the pending DL data is longer than a configured threshold. In some example embodiments, NW-A may indicate to the UE that NW-A will keep the data packet for a specific timer value for the UE to resume RRC connection. In some example embodiments, NW-A may indicate the timer value to the UE, which may be same as or different from the time of absence indicated by the UE. During this time, the network may refrain from attempting to page the UE for the pending data. In this scenario, the timer value may indicate how long the network will buffer the pending DL data, without triggering the paging. However, at this timer expires, if the UE has not established/resumed RRC connection with NW-A, the data packets may be dropped at NW-A and NW-A may follow normal paging and clear its buffer. In certain example embodiments, the RRC release message may include a suspend configuration in case the NW decides to move the UE to an RRC_INACTIVE state.

In certain example embodiments, the UE may also indicate as part of the UAI, whether it intends to respond to the paging from NW-A after switching. In some example embodiments, the UE may make the decision on whether it intends to respond to the paging from NW-A based on a priority of the RRC connection it is attempting in another NW (e.g., NW-B). In other example embodiments, the UE may also decide this based on whether the other NW (e.g., NW-B) supports gap for performing activities in a different NW (e.g., NW-A). Further, the UE may have learned whether the other network supports a gap from an earlier switching to the other network.

According to certain example embodiments, the NW-A that has received the indication of RRC connection leave with absence time in formation from the UE may have no DL data at the time the UE is leaving. However, the NW-A may receive new data from another application after the UE leaves. According to some example embodiments, the NW-A may use the knowledge about the UE's absence time, and refrain from paging the UE for newly arrived data while the timer (set according to the UE's absence time, or a different value) is running. According to other example embodiments, the NW that has not received an indication of the time of absence may indicate to the UE a timer value during which the NW will not page the UE. This allows the UE to refrain from monitoring from paging and, thus, save power. In some example embodiments, a static prohibit timer may be pre-defined or configured by the NW. If a UE has left NW-A with a MUSIM leave indication, NW-A may not change this UE during the "prohibit timer".

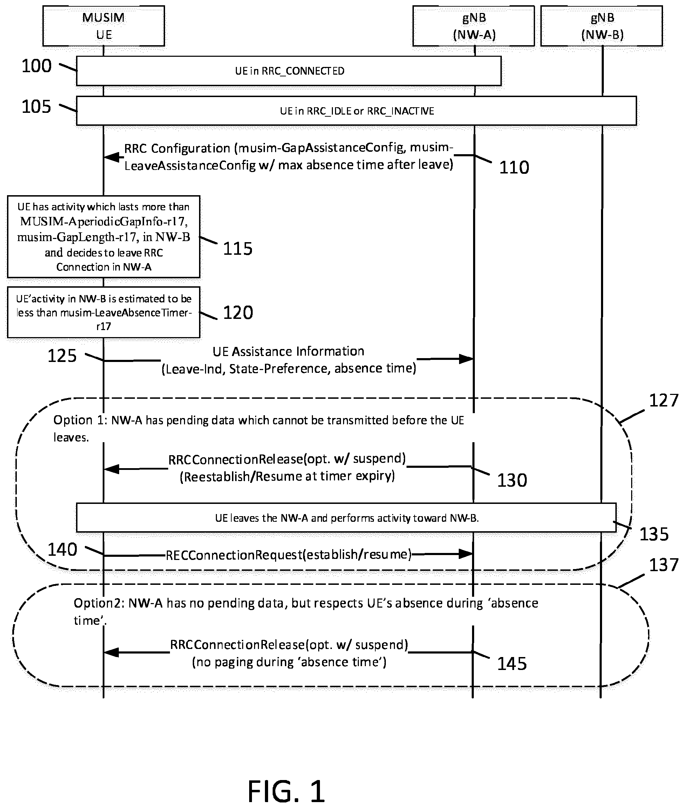

FIG. 1 illustrates an example signal diagram, according to certain example embodiments. At operation 100, the UE may be in RRC _CONNECTED state with NW-A. At operation 105, the UE may be in RRC_IDLE or RRC INACTIVE state in NW-B. At operation 110, NW-A may transmit an RRC configuration to the UE. According to certain example embodiments, the RRC configuration may include a maximum time of absence (e.g., second configured value described above) from RRC connection after leave during which NW-A may not page the UE for pending or arrived DL data, in such as for example, the musim-LeaveAssistanceConfig IE. At operation 115, the UE may determine that it has activity that lasts more than a configured value (e.g., first configured value described above), such as for example, musim-GapLength-r17 specified in MUSIM-AperiodicGapInfo-r17 in the musim-GapAssistanceConfig IE of the RRC configuration, in NW-B, and may decide to leave RRC connection in NW-A.

As further illustrated in FIG. 1, at operation 120, the UE may determine that the UE's activity in NW-B is estimated to be less than the maximum time of absence (e.g., second configured value described above) from RRC connection after leave. At operation 125, the UE may transmit a UAI message to NW-A. According to certain example embodiments, the UAI message may include, among a plurality of information, an absence time that the UE will be absent from NW-A. For instance, the absence time may indicate the UE's (minimum/maximum) estimated time of absence. According to some example embodiments, the time of absence may be estimated by the UE based on which activity is triggered, and may include the total time for signaling and processing. According to some example embodiments, the time of absence is between a first configured value, such as for example, musim-GapLength-r17, and a second configured value, such as for example, the maximum time of absence from RRC connection after leave, described above.

According to certain example embodiments, in the case of 127 in FIG. 1, when NW-A has pending data, NW-A may buffer the data, and inform the UE to reconnect to NW-A once the absence time expires. During the absence time, NW-A may refrain from paging the UE. In the case of 127 in FIG. 1, at operation 130, NW-A may transmit an RRC_CONNECTION release message that may include a suspend configuration in case NW-A decides to move the UE to RRC INACTIVE state. The RRC _CONNECTION release message may include an indication to the UE that it should return to RRC connection with NW-A at or before the absence time expires.

At operation 135, the UE may leave NW-A, and perform activity toward NW-B. Once the UE completes the activity toward NW-B, the UE may, at operation 140, reconnect to NW-A. According to certain example embodiments, at 137 in FIG. 1, there may be a time when NW-A does not have any pending data, but respects the UE's absence during the absence time. In this instance, at operation 145, NW-A may transmit an RRC _CONNECTION release message to the UE and include an indication that NW-A will refrain from paging the UE during the absence time.

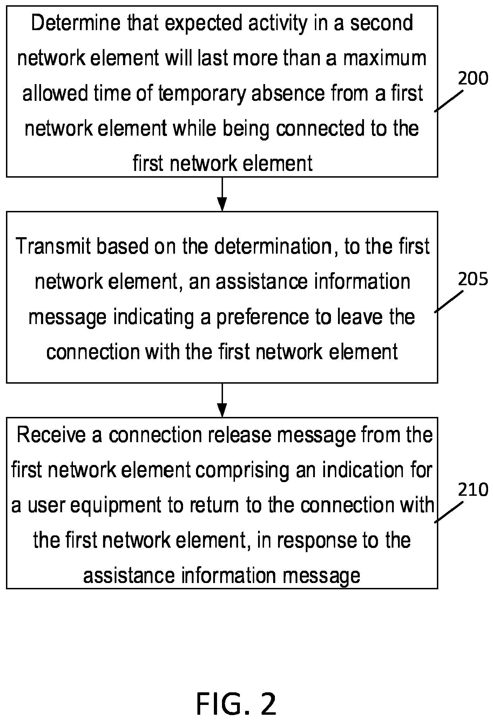

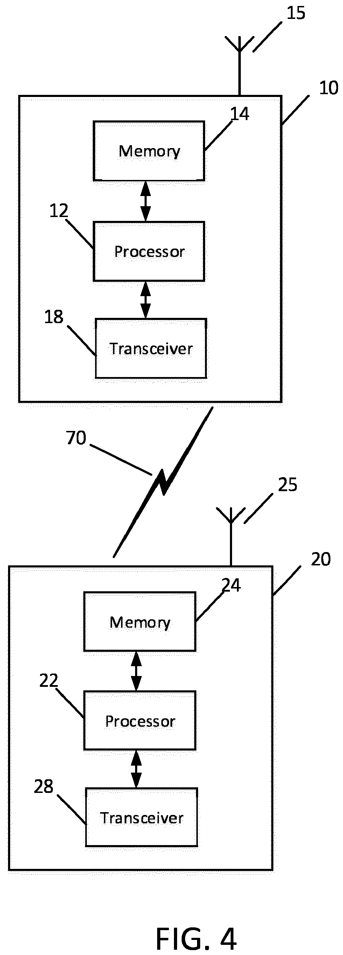

FIG. 2 illustrates an example flow diagram of a method, according to certain example embodiments. In an example embodiment, the method of FIG. 2 may be performed by a network entity, or a group of multiple network elements in a 3GPP system, such as LTE or 5G-NR. For instance, in an example embodiment, the method of FIG. 2 may be performed by a UE similar to one of apparatuses 10 or 20 illustrated in FIG. 4.

According to certain example embodiments, the method of FIG. 2 may include, at 200, determining that expected activity in a second network element will last more than a maximum allowed time of temporary absence from a first network element while being connected to the first network element. According to certain example embodiments, temporary absence may correspond to the UE remaining in RRC _CONNECTED state in the first network during such absence. The method may also include, at 205, transmitting based on the determination, to the first network element, an assistance information message indicating a preference to leave the connection with the first network element. The method may further include, at 210, receiving a connection release message from the first network element including an indication for a user equipment to return to the connection with the first network element, in response to the assistance information message.

According to certain example embodiments, the assistance information message may include an indication of an absence time of the user equipment from the first network element. According to some example embodiments, the indication for the user equipment to return to the connection with the first network element is in view of pending or arrived data for the user equipment. According to other example embodiments, the method may also include resuming or re-establishing the connection with the first network element based on the indication for the user equipment to return to the connection with the first network element.

In certain example embodiments, the absence time may be estimated by the user equipment based on the expected activity in the second network, and the absence time includes a total time for signaling and processing between the user equipment and the second network element. In certain example embodiments, the absence time may also include additional time for user plane processing at the second network element. In some example embodiments, the assistance information message may include an indication of whether the user equipment intends to respond to paging from the first network element after leaving. In other example embodiments, whether the user equipment intends to respond to paging from the first network element after leaving may be based on a priority of the connection with the second network element, and/or whether the expected activity in second network element allows any interruption. In other example embodiments the connection release message may include a timer value indicating at least one of an amount of time the user equipment can leave the connection with the first network element before returning, an amount of time that the pending data can be buffered, or an amount of time paging from the first network element will be suspended. In further example embodiments, the method may also include receiving, from the first network element, a network connection configuration including configuration of the maximum allowed time of temporary absence. In further example embodiments, the method may also include receiving, from the first network element, a network connection configuration including configuration of a maximum time of absence by the user equipment from the first network element during which the first network element may not page the UE for pending or arrived DL data, or reverting back to a connected state with the first network element after completion of the expected activity in the second network element. In certain example embodiments, transmitting the assistance information message is based on the determination that the expected activity in the second network element will last less than the maximum time of absence.

In certain example embodiments, the method may further include transmitting the assistance information message to the first network element when the expected activity in the second network element is determined to be less than the maximum time of absence. In some example embodiments, the method may also include resuming or re-establishing the connection with the first network element based on the maximum time of absence from the connection with the first network element. According to certain example embodiments, no resume/re-establishment may be performed if the maximum time is exceeded as the data may have been flushed at the network side. In other example embodiments, the user equipment does not receive paging from the first network element during the user equipment's absence for up to the maximum time of absence. According to some example embodiments, the network may wait for the UE to return during the maximum absence time. In further example embodiments, the indication for the user equipment to return to the connection with the first network element may further include an indication on a maximum time for return to the connection, and resuming or re-establishing the connection with the first network element based on the indication for the user equipment to return to the connection with the first network element when the maximum time for return to the connection is not exceeded.

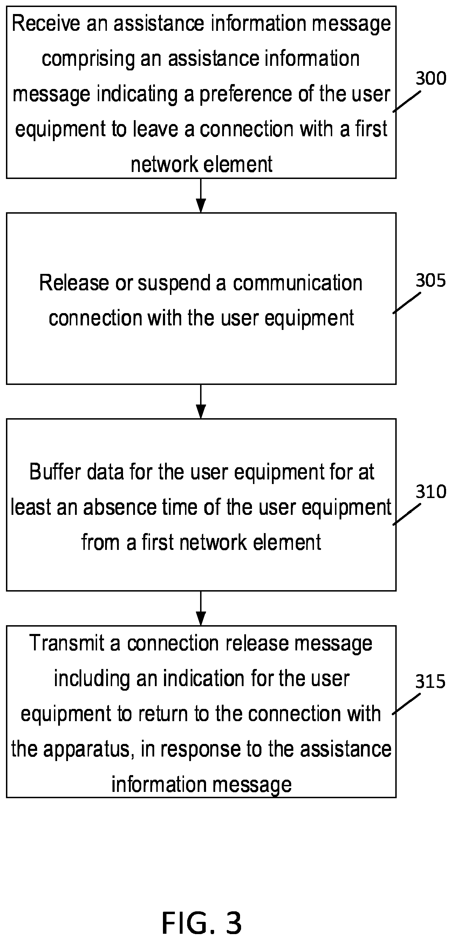

FIG. 3 illustrates an example of a flow diagram of another method, according to certain example embodiments. In an example embodiment, the method of FIG. 3 may be performed by a network entity, or a group of multiple network elements in a 3GPP system, such as LTE or 5G-NR. For instance, in an example embodiment, the method of FIG. 3 may be performed by a gNB, network, cell, or any other device similar to one of apparatuses 10 or 20 illustrated in FIG. 4.

According to certain example embodiments, the method of FIG. 3 may include, at 300, receiving, from a user equipment, an assistance information message comprising an assistance information message indicating a preference of the user equipment to leave a connection with a first network element. The method may also include, at 305, suspending communication connection with the user equipment during the absence time. The method may further include, at 310, buffering data for the user equipment for at least an absence time of the user equipment from a first network element. Further, the method may include, at 315, transmitting to the user equipment a connection release message including an indication for the user equipment to return to the connection with the first network element, in response to the assistance information message.

According to certain example embodiments, the method may also include configuring the user equipment with a maximum allowed time of absence of the user equipment from the first network element where pending downlink data or newly arrived data will be buffered without paging. According to some example embodiments, the method may further include paging the user equipment after the absence time is expired when the user equipment has not resumed connection with the first network element. According to other example embodiments, the absence time may be the time the first network element keeps buffering pending downlink data and newly arrived data, and avoids paging the user equipment. According to certain example embodiments, the indication for the user equipment to return to the first network element may be in view of pending downlink data or newly arrived data for the user equipment. according to other example embodiments, the connection release message comprises a timer value indicating at least one of an amount of time the user equipment can leave the connection with the apparatus before returning, an amount of time that the pending data can be buffered, or an amount of time paging from the first network element will be suspended.

In certain example embodiments, the method may also include receiving data from an application after the user equipment leaves the first network element for a second network element, and suspending paging of the user equipment during the absence time. In some example embodiments, the method may also include indicating a timer value within the maximum time of absence to the user equipment when the absence time is not received from the user equipment. In certain example embodiments, the first network element suspends paging of the user equipment during the timer value.

FIG. 4 illustrates a set of apparatus 10 and 20 according to certain example embodiments. In certain example embodiments, the apparatus 10 may be an element in a communications network or associated with such a network, such as a UE, mobile equipment (ME), mobile station, mobile device, stationary device, IoT device, or other device. It should be noted that one of ordinary skill in the art would understand that apparatus 10 may include components or features not shown in FIG. 4.

In some example embodiments, apparatus 10 may include one or more processors, one or more computer-readable storage medium (for example, memory, storage, or the like), one or more radio access components (for example, a modem, a transceiver, or the like), and/or a user interface. In some example embodiments, apparatus 10 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 10 may include components or features not shown in FIG. 4.

As illustrated in the example of FIG. 4, apparatus 10 may include or be coupled to a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 12 is shown in FIG. 4, multiple processors may be utilized according to other example embodiments. For example, it should be understood that, in certain example embodiments, apparatus 10 may include two or more processors that may form a multiprocessor system (e.g., in this case processor 12 may represent a multiprocessor) that may support multiprocessing. According to certain example embodiments, the multiprocessor system may be tightly coupled or loosely coupled (e.g., to form a computer cluster).

Processor 12 may perform functions associated with the operation of apparatus 10 including, as some examples, precoding of antenna gain/phase parameters, encoding and decoding of individual bits forming a communication message, formatting of information, and overall control of the apparatus 10, including processes illustrated in FIGs. 1 and 2.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media. The instructions stored in memory 14 may include program instructions or computer program code that, when executed by processor 12, enable the apparatus 10 to perform tasks as described herein.

In certain example embodiments, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10 to perform any of the methods illustrated in FIGs. 1 and 2.

In some example embodiments, apparatus 10 may also include or be coupled to one or more antennas 15 for receiving a downlink signal and for transmitting via an uplink from apparatus 10. Apparatus 10 may further include a transceiver 18 configured to transmit and receive information. The transceiver 18 may also include a radio interface (e.g., a modem) coupled to the antenna 15. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module/ a Fast Fourier Transform (FFT) module, and the like, to process symbols, such as OFDMA symbols, carried by a downlink or an uplink.

For instance, transceiver 18 may be configured to modulate information on to a carrier waveform for transmission by the antenna(s) 15 and demodulate information received via the antenna(s) 15 for further processing by other elements of apparatus 10. In other example embodiments, transceiver 18 may be capable of transmitting and receiving signals or data directly. Additionally or alternatively, in some example embodiments, apparatus 10 may include an input and/or output device (I/O device). In certain example embodiments, apparatus 10 may further include a user interface, such as a graphical user interface or touchscreen.

In certain example embodiments, memory 14 stores software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software. According to certain example embodiments, apparatus 10 may optionally be configured to communicate with apparatus 20 via a wireless or wired communications link 70 according to any radio access technology, such as NR.

According to certain example embodiments, processor 12 and memory 14 may be included in or may form a part of processing circuitry or control circuitry. In addition, in some example embodiments, transceiver 18 may be included in or may form a part of transceiving circuitry.

For instance, in certain example embodiments, apparatus 10 may be controlled by memory 14 and processor 12 to determine that expected activity in a second network element will last more than a maximum allowed time of temporary absence from a first network element while being connected to the first network element. Apparatus 10 may further be controlled by memory 14 and processor 12 to transmit based on the determination, to the first network element, an assistance information message indicating a preference to leave the connection with the first network element. In addition, apparatus 10 may be controlled by memory 14 and processor 12 to receive a connection release message from the first network element including an indication for a user equipment to return to the connection with the first network element, in response to the assistance information message.

As illustrated in the example of FIG. 4, apparatus 20 may be a network, core network element, or element in a communications network or associated with such a network, such as a gNB. It should be noted that one of ordinary skill in the art would understand that apparatus 20 may include components or features not shown in FIG. 4.

As illustrated in the example of FIG. 4, apparatus 20 may include a processor 22 for processing information and executing instructions or operations. Processor 22 may be any type of general or specific purpose processor. For example, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in FIG. 4, multiple processors may be utilized according to other example embodiments. For example, it should be understood that, in certain example embodiments, apparatus 20 may include two or more processors that may form a multiprocessor system (e.g., in this case processor 22 may represent a multiprocessor) that may support multiprocessing. In certain example embodiments, the multiprocessor system may be tightly coupled or loosely coupled (e.g., to form a computer cluster).

According to certain example embodiments, processor 22 may perform functions associated with the operation of apparatus 20, which may include, for example, precoding of antenna gain/phase parameters, encoding and decoding of individual bits forming a communication message, formatting of information, and overall control of the apparatus 20, including processes illustrated in FIGs. 1 and 3.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In certain example embodiments, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20 to perform the methods illustrated in FIGs. 1 and 3.

In certain example embodiments, apparatus 20 may also include or be coupled to one or more antennas 25 for transmitting and receiving signals and/or data to and from apparatus 20. Apparatus 20 may further include or be coupled to a transceiver 28 configured to transmit and receive information. The transceiver 28 may include, for example, a plurality of radio interfaces that may be coupled to the antenna(s) 25. The radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and the like. The radio interface may include components, such as filters, converters (for example, digital-to-analog converters and the like), mappers, an IFFT module/an FFT module, and the like, to generate symbols for a transmission via one or more downlinks and to receive symbols (for example, via an uplink).

As such, transceiver 28 may be configured to modulate information on to a carrier waveform for transmission by the antenna(s) 25 and demodulate information received via the antenna(s) 25 for further processing by other elements of apparatus 20. In other example embodiments, transceiver 18 may be capable of transmitting and receiving signals or data directly. Additionally or alternatively, in some example embodiments, apparatus 20 may include an input and/or output device (I/O device).

In certain example embodiment, memory 24 may store software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software.

According to some example embodiments, processor 22 and memory 24 may be included in or may form a part of processing circuitry or control circuitry. In addition, in some example embodiments, transceiver 28 may be included in or may form a part of transceiving circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to cause an apparatus (e.g., apparatus 10 and 20) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

For instance, in certain example embodiments, apparatus 20 may be controlled by memory 24 and processor 22 to receive, from a user equipment, an assistance information message comprising an assistance information message indicating a preference of the user equipment to leave a connection with the apparatus. Apparatus 20 may further be controlled by memory 24 and processor 22 to release or suspend a communication connection with the user equipment. In addition, apparatus 20 may be controlled by memory 24 and processor 22 to buffer data for the user equipment for at least an absence time of the user equipment from the apparatus. Further, apparatus 20 may be controlled by memory 24 and processor 22 to transmit the user equipment a connection release message including an indication for the user equipment to return to the connection with the apparatus, in response to the assistance information message.

In some example embodiments, an apparatus (e.g., apparatus 10 and/or apparatus 20) may include means for performing a method, a process, or any of the variants discussed herein. Examples of the means may include one or more processors, memory, controllers, transmitters, receivers, and/or computer program code for causing the performance of the operations.

Certain example embodiments may be directed to an apparatus that includes means for performing any of the methods described herein including, for example, means for determining that expected activity in a second network element will last more than a maximum allowed time of temporary absence from a first network element while being connected to a first network element. In addition, the apparatus may include means for transmitting based on the determination, to the first network element, an assistance information message indicating a preference to leave the connection with the first network element. Further, the apparatus may include means for receiving a connection release message from the first network element including an indication for a user equipment to return to the connection with the first network element, in response to the assistance information message.

Certain example embodiments may also be directed to an apparatus that includes means for receiving, from a user equipment, an assistance information message comprising an assistance information message indicating a preference of the user equipment to leave a connection with the apparatus. The apparatus may further include means for releasing or suspending a communication connection with the user equipment. In addition, the apparatus may include means for buffering data for the user equipment for at least an absence time of the user equipment from the apparatus. Further, the apparatus may include means for transmitting to the user equipment a connection release message including an indication for the user equipment to return to the connection with the apparatus, in response to the assistance information message.

Certain example embodiments described herein provide several technical improvements, enhancements, and /or advantages. For instance, in some example embodiments, it may be possible to provide efficient provisioning of data that may be pending at the network after the UE leaves its RRC connection of the network due to required operations in another network. In other example embodiments, the NW may have the capability to avoid wasting resources to page the UE while the UE may ignore the pages. In addition, the UE may save interruption of its connection in NW-B and does not monitor for paging from NW-A when the UE knows that NW-A will not page it during a given time. The UE may also autonomously return to NW-A rather than stay in IDLE state, and wait for paging after it finishes in NW-B.

A computer program product may include one or more computer-executable components which, when the program is run, are configured to carry out some example embodiments. The one or more computer-executable components may be at least one software code or portions of it. Modifications and configurations required for implementing functionality of certain example embodiments may be performed as routine(s), which may be implemented as added or updated software routine(s). Software routine(s) may be downloaded into the apparatus.

As an example, software or a computer program code or portions of it may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (e.g., apparatus 10 or apparatus 20), for example through the use of an application specific integrated circuit (ASIC), a programmable gate array (PGA), a field programmable gate array (FPGA), or any other combination of hardware and software. In yet another example embodiment, the functionality may be implemented as a signal, a non-tangible means that can be carried by an electromagnetic signal downloaded from the Internet or other network.

According to certain example embodiments, an apparatus, such as a node, device, or a corresponding component, may be configured as circuitry, a computer or a microprocessor, such as single-chip computer element, or as a chipset, including at least a memory for providing storage capacity used for arithmetic operation and an operation processor for executing the arithmetic operation.

One having ordinary skill in the art will readily understand that the disclosure as discussed above may be practiced with procedures in a different order, and/or with hardware elements in configurations which are different than those which are disclosed. Therefore, although the disclosure has been described based upon these example embodiments, it would be apparent to those of skill in the art that certain modifications, variations, and alternative constructions would be apparent, while remaining within the spirit and scope of example embodiments. Although the above embodiments refer to 5G NR and LTE technology, the above embodiments may also apply to any other present or future 3GPP technology, such as LTE-advanced, and/or fourth generation (4G) technology.

### Partial Glossary:

- 3GPP: 3rd Generation Partnership Project
- 5G: 5th Generation
- 5GCN: 5G Core Network
- 5GS: 5G System
- AP: Access Point
- BS: Base Station
- CR: Change Request
- DL: Downlink
- eNB: Enhanced Node B
- E-UTRAN: Evolved UTRAN
- FO: Frequency Offset
- FR2: Frequency Range 2
- gNB: 5G or Next Generation NodeB
- IMSI: International Mobile Subscriber
- LTE: Long Term Evolution
- MNO: Mobile Network Operator
- MUSIM: Multiple Universal Subscriber Identity Modules
- MVNO: Mobile Virtual Network Operator
- NAS: Non-Access Stratum
- NR: New Radio
- NW: Network
- RRC: Radio Resource Control
- Rx: Receive
- SIB: System Information Block
- SUPI: Subscription Permanent Identifier
- Tx: Transmit
- UAI: UEAssistanceInformation
- UE: User Equipment
- UL: Uplink

## Claims

1. An apparatus, comprising:
means for determining that expected activity in a second network element will last more than a maximum allowed time of temporary absence from a first network element while being connected to the first network element;
means for transmitting based on the determination, to the first network element, an assistance information message indicating a preference to leave the connection with the first network element; and
means for receiving a connection release message from the first network element comprising an indication for the apparatus to return to the connection with the first network element, in response to the assistance information message.

2. The apparatus according to claim 1, further comprising:
means for resuming or re-establishing the connection with the first network element based on the indication for the apparatus to return to the connection with the first network element.

3. The apparatus according to any of claims 1-2,
wherein an absence time is estimated by the apparatus based on the expected activity in the second network, and
wherein the absence time comprises a total time for signaling and processing between the apparatus and the second network element.

4. The apparatus according to claim 3, wherein the assistance information message comprises at least one of the following: an indication of the absence time of the apparatus from the first network element, or an indication of whether the apparatus intends to respond to paging from the first network element after leaving.

5. The apparatus according to claim 4, wherein whether the apparatus intends to respond to paging from the first network element after leaving is based on
a priority of the connection with the second network element, or
whether the expected activity in second network element allows any interruption.

6. The apparatus according to any of claims 1-5, wherein the connection release message comprises a timer value indicating at least one of the following: an amount of time the user equipment can leave the connection with the first network element before returning,
an amount of time that the pending data can be buffered, or
an amount of time paging from the first network element will be suspended.

7. The apparatus according to any of claims 1-6, further comprising:
means for receiving, from the first network element, a network connection configuration comprising configuration of a maximum time of absence by apparatus from the first network element; or
means for reverting back to a connected state with the first network element after completion of the expected activity in the second network element.

8. The apparatus according to claim 7, wherein the transmitting the assistance information message to the first network element comprises transmitting the assistance information message when the expected activity in the second network element is determined to be less than the maximum time of absence.

9. An apparatus, comprising:
means for receiving, from a user equipment, an assistance information message indicating a preference of the user equipment to leave a connection with the apparatus;
means for releasing or suspending a communication connection with the user equipment;
means for buffering data for the user equipment for at least an absence time of the user equipment from the apparatus; and
means for transmitting to the user equipment a connection release message comprising an indication for the user equipment to return to the connection with the apparatus, in response to the assistance information message.

10. The apparatus according to claim 9, further comprising:
means for configuring the user equipment with a maximum time of absence of the user equipment from the apparatus where pending downlink data or newly arrived data will be buffered without paging.

11. The apparatus according to claim 10, further comprising:
means for indicating a timer value within the maximum time of absence to the user equipment when the absence time is not received from the user equipment.

12. The apparatus according to claim 11, wherein the connection release message comprises the timer value indicating at least one of the following:
an amount of time the user equipment can leave the connection with the apparatus before returning,
an amount of time that the pending data can be buffered, or
an amount of time paging from the apparatus will be suspended.

13. A method comprising:
determining that expected activity in a second network element will last more than a maximum allowed time of temporary absence from a first network element while being connected to the first network element;
transmitting based on the determination, to the first network element, an assistance information message indicating a preference to leave the connection with the first network element; and
receiving a connection release message from the first network element comprising an indication for a user equipment to return to the connection with the first network element, in response to the assistance information message.

14. A method, comprising:
receiving, from a user equipment, an assistance information message indicating a preference of the user equipment to leave a connection with a first network element;
releasing or suspending a communication connection with the user equipment;
buffering data for the user equipment for at least an absence time of the user equipment from the first network element; and
transmitting to the user equipment a connection release message comprising an indication for the user equipment to return to the connection with the apparatus, in response to the assistance information message.

15. A computer readable medium comprising instructions that, when executed by a processor, cause the processor to perform at least a method according to any of claims 13-14.
